# EUROPEAN PATENT SPECIFICATION

(11) **EP 3 437 417 B1**
(45) Date of publication and mention of the grant of the patent: **21.04.2021**
(21) Application number: 17719315.8
(22) Date of filing: 30.03.2017
(51) Int. Cl.: H04W 74/08

(54) **METHODS FOR IMPLEMENTING UPLINK CHANNEL ACCESS IN ELAA-BASED COMMUNICATION SYSTEM**
VERFAHREN ZUR IMPLEMENTIERUNG EINES UPLINK-KANALZUGRIFFS IN EINEM ELAA-BASIERTEN KOMMUNIKATIONSSYSTEM
PROCÉDÉS POUR METTRE EN OEUVRE UN ACCÈS À UN CANAL DE LIAISON MONTANTE DANS UN SYSTÈME DE COMMUNICATION BASÉ SUR ELAA

(30) Priority: 30.03.2016 CN 201610192417
(43) Date of publication of application: 06.02.2019
(73) Proprietor: Alcatel Lucent, 91620 Nozay (FR)
(72) Inventor: TAO, Tao, 201206 Shanghai (CN); LIU, Jianguo, 201206 Shanghai (CN); MENG, Yan, 201206 Shanghai (CN); GU, Junrong, 201206 Shanghai (CN); WANG, Dawei, 201206 Shanghai (CN); LUO, Zhe, 201206 Shanghai (CN); SHEN, Gang, 201206 Shanghai (CN)
(74) Representative: DREISS Patentanwälte PartG mbB
(86) International application number: PCT/IB2017/000446
(87) International publication number: WO 2017/168251

(56) References cited:
- LG ELECTRONICS: "LBT schemes in LAA UL", 3GPP DRAFT; R1-160630 UL LBT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 14 February 2016 (2016-02-14), XP051053959, Retrieved from the Internet: URL:http://www.3gpp.org/ftp/Meetings_3GPP_ SYNC/RAN1/Docs/ [retrieved on 2016-02-14]
- LG ELECTRONICS: "PUSCH transmission in LAA", 3GPP DRAFT; R1-160625 LAA PUSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 14 February 2016 (2016-02-14), XP051053954, Retrieved from the Internet: URL:http://www.3gpp.org/ftp/Meetings_3GPP_ SYNC/RAN1/Docs/ [retrieved on 2016-02-14]

## Description

### FIELD

The present disclosure relates to mobile communication technologies, and more specifically, to methods for implementing an uplink channel access in an eLAA-based communication system and methods for assisting a User Equipment (UE) to maintain a contention window size in a base station of the eLAA-based communication system.

### BACKGROUND

In RAN#70, a new work item on enhanced LAA for LTE (eLAA-LTE) is approved to support Licensed-Assisted Access (LAA) SCell operation on unlicensed spectrum for Uplink (UL). The listen-before-talk (LBT) as one of the most important mechanisms to ensure the coexistence fairness should be designed carefully. In current ETSI BRAN discussions, it is highly possible to support the UL transmission within a Maximum Channel Occupancy Time (MCOT) acquired by the base station (eNB). In this case, 25 us one-shot Clear Channel Assessment (CCA) as the LBT operation may be sufficient within the gap between the end of a Downlink (DL) transmission and the start of a UL transmission. However, for the UL transmission burst, the LBT operation is not clear at the moment.

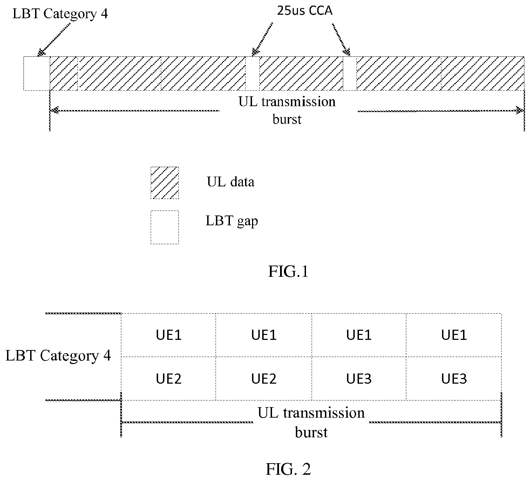

In the 3GPP TSG RANI #84 meeting, R1-160630, the LBT Category 4 channel access procedure has been agreed to be supported in the LAA UL. However, the application scenario for the UL LBT Category 4 is not clear. To start a UL transmission burst as shown in Figure 1, the LBT Category 4 can ensure better coexistence fairness between WiFi and asynchronous LAA DL transmission.

Furthermore, the detailed UL LBT Category 4 design (e.g., the channel access parameters, the mechanism of Contention Window Size (CWS) adjustment) is still an open issue. In the DL LAA, the channel access parameters and CWS value are determined at the eNB side since eNB is the one who will contend for channel access. However, this is not applicable to maintain the UL access parameters at the UE side since the LAA UL transmission is scheduled by the eNB. For example, if an eNB schedules a large number of continuous subframes for a UE and the UE chooses a set of channel access parameters corresponding to a high priority, the UE has to stop the transmission and perform LBT again when the MCOT of the higher priority is reached. If an eNB schedules only a small number of subframes (e.g. 1 subframe) for a UE in a UL transmission burst and the UE chooses a set of channel access parameters corresponding to a low priority, the UE will take a long time to compete for channel access. This will decrease the spectrum efficiency of the UL transmission.

In addition, the CWS adjustment is based on the HARQ-ACK feedback information in the DL LBT procedure. For the UL, such an explicit feedback is not available at the UE side currently in LAA. A UE may assume that the PUSCH transmission is successful if it does not detect a corresponding PDCCH/EPDCCH with DCI format 0/4 within a certain period of time. If the eNB does not continue to retransmit a certain HARQ process (and thereby put this for higher layer retransmission - i.e. additional delay and much larger overhead in the end will be caused), the reliability of such HARQ-ACK would be lowered.

Furthermore, the LBT gap as a new feature in the LAA frame structure is being discussed in 3GPP. Considering multi-user multiplexing in LAA UL, multiple UEs can perform their LBT procedures in the LBT gap. If different UEs have different CWSs, the possibility for these UEs to be multiplexed in this subframe is relatively small. If the eNB knows the CWS of each UE, it can avoid scheduling UEs with very different CWSs in one subframe or can configure a more suitable LBT gap.

### SUMMARY

Therefore, it's required to propose a technical solution for maintaining UL channel access parameters at the eNB side to assist a UE to implement the UL channel access in the eLAA-based communication system.

According to a first aspect of the present disclosure, there is provided a method : according to claim 1.

According to a second aspect of the present disclosure, there is provided a method : according to claim 3.

### BRIEF DESCRIPTION OF THE DRAWINGS

Other features, objectives and advantages of the present disclosure will become more apparent from following detailed description of the nonrestrictive embodiments of the disclosure in conjunction with the accompanying drawings, wherein:
FIG. 1 illustrates the frame structure for the UL LAA;
FIG. 2 illustrates the UL transmission burst according to an embodiment of this disclosure; and
FIG. 3 illustrates a schematic view of CWS maintenance in an eNB according to another embodiment of this disclosure.

In the accompanying drawings, same or similar reference numbers are used for the same or corresponding parts or features.

### DETAILED DESCRIPTION

In this disclosure, a detailed design for the UL LBT Category 4 is proposed to support multiple QoS traffics in the UL LAA. The proposed LBT design is assisted by the eNB with the following features:
**determination of a set of channel access parameters**

The set of channel access parameters corresponding to the LBT priority should be determined before the UE performs the LBT Category 4 operation. The eNB will determine the channel access parameters by considering the following factors:
- transmission duration of the UL transmission burst;
- number of the UEs scheduled in the UL transmission burst;
- traffic types and interference situations of the scheduled UEs;
- LAA TDD configuration; and
- partial or full of above factors.

In an embodiment of the disclosure, the channel access parameters determined by the eNB should be further acquired by the UE. This will be discussed later.

In an embodiment, the eNB can explicitly indicate the selected LBT priority X to the UE via Layer 1 signaling. The set of channel access parameters corresponding to the LBT priority X used for the LBT operation can be determined in the UE.

Herein, preferably, the relations between LBT priorities and a corresponding set of UL channel access parameters are pre-stored at the eNB side and the UE side, respectively. The eNB then is able to determine the LBT priority X according to the table after a set of UL channel access parameters is determined. The UE is able to determine corresponding UL channel access parameters according to the table and based on the aforementioned signaling

In addition, the UE could maximize channel occupancy by transmitting additional traffics corresponding to LBT priorities larger than X only if the traffics corresponding to LBT priorities smaller than or equal to X have been exhausted. In the LBT framework, the LBT priorities smaller than or equal to X indicate LBT priorities that are not less than the LBT priorities determined by the eNB. The LBT priorities larger than X indicate LBT priorities that are less than the LBT priorities determined by the eNB.

Furthermore, the UE is able to further adjust the LBT priorities according to its own traffic type.

In another embodiment, the eNB can indicate some or one of the access parameters (e.g., the CWS value, or maximum channel occupancy time, or the LBT gap configuration) to the UE via Layer 1 signaling, and then the UE has flexibility to interpret the other access parameters according to the pre-defined LBT priority table (the aforementioned table) and its own traffic type.

In another embodiment, if the information associated with an expected transmission duration can be acquired by the UE, the UE could determine the LBT priority X and the corresponding UL channel access parameters with any or any combination of the following considerations:
1. The MCOT of the selected LBT priority X shall not be shorter than the expected transmission duration.
2. The traffic corresponding to the LBT priorities smaller than or equal to X can be transmitted in the expected transmission duration.

Herein, the expected transmission duration indicates the subframes or time scheduled for transmission by the UE in the UL transmission burst.

Furthermore, similarly, as mentioned above, the UE could maximize channel occupancy by transmitting additional traffics corresponding to LBT priorities larger than X only if the traffics corresponding to LBT priorities smaller than or equal to X have been exhausted.

Preferably, the transmission duration can be indicated to the UE from the eNB in either an implicit or an explicit manner.

In an embodiment, the eNB can dynamically or semi-statically inform the expected transmission duration to the UE through Layer 1 signaling.

In another embodiment, the UE can acquire the transmission duration according to a UL grant in case of multi-subframe scheduling.

In yet another embodiment, the UE could assume that the transmission duration is not more than one subframe if no specific information is received.

In each of the above embodiments, the UE will perform an LBT operation based on the determined UL channel access parameters.

Preferably, when multiple UEs will perform the LBT operations in a transmission burst, the eNB can configure the same set of access parameters to all UEs or configure different sets of access parameters to respective UEs.

### CWS maintenance

The eNB can help the UE to maintain and adjust the CWS value.

a) Solution 1: A Common CWS maintenance is configured for all UEs served by the eNB.

In this solution, the eNB maintains only one set of CWSs with respect to different priorities of all UEs. Table 1 shows a CWS table for one UE in which corresponding CWSs are set for different priorities. Furthermore, in this embodiment, all UEs have the same CWS table. That is to say, only one set of CWSs needs to be maintained.

**Table 1: CWSs for a UE**

| | |
|---|---|
| Priority 1 | CWS 1 |
| Priority 2 | CWS 2 |
| Priority 3 | CWS 3 |
| Priority 4 | CWS 4 |

In this solution, the CWSs will be simultaneously updated for all LBT priorities based on the result of the CWS trigger mechanisms.

In an embodiment, the CWS trigger mechanism can be based on the PUSCH decoding result in the first subframe of the last UL transmission burst. In the last UL transmission burst, only the PUSCH decoding result of UEs that perform LBT Category 4 operations are considered. It should be noted that the last UL transmission burst corresponding to a UE may be different for each UE and whether it is successful in decoding is also different. Herein, PUSCH decoding result of those UEs that implement LBT Category 4 operations will impact the update of aforementioned CWSs.

In an embodiment of this disclosure, the last UL transmission burst is for example completely a UL transmission burst.

In another embodiment, the CWS trigger mechanism can be based on PUSCH decoding result in the last valid subframe of the last UL transmission burst. Similarly, in the last UL transmission burst, only PUSCH decoding result of UEs that perform LBT Category 4 operations are considered. Furthermore, the last UL transmission burst corresponding to a UE may be different for each UE and whether it is successful in decoding is also different. Similarly, herein, PUSCH decoding result of those UEs that implement LBT Category 4 operations will impact the update of aforementioned CWSs.

Similarly, the last UL transmission burst is for example completely a UL transmission burst.

In yet another embodiment, the CWS trigger mechanism can be based on PUSCH decoding result in all subframes of the last UL transmission burst. In the last UL transmission burst, all UEs perform UL transmissions. In this embodiment, as long as the UEs perform the UL transmissions, the PUSCH decoding result of the UEs will impact the update of the CWSs.

Preferably, the PUSCH decoding result can be defined as the ratio of the number of incorrectly decoded PUSCHs to the number of correctly decoded PUSCHs. If this ratio is larger than a pre-defined value, the CWSs will be exponentially or linearly increased. Otherwise, the CWSs will be reset to the minimum CWSs corresponding to respective priorities.

Finally, the eNB will transmit the updated CWSs or a backoff counter generated therefrom to the UE via a Layer 1 signaling.

b) Solution 2: Individual CWS maintenances are configured for different UEs.

The eNB maintains individual sets of CWSs with respect to different priorities for respective UEs. To adjust CWSs of each UE, the follow solutions are considered.
i. For all LBT priorities, CWSs will be exponentially or linearly updated based on the result from the CWS trigger mechanism. In an embodiment, the CWS trigger mechanism can be based on the PUSCH decoding result of the first subframe in the last UL transmission burst. In the last UL transmission burst, the UE performs LBT Category 4 operation.
   In an embodiment of this disclosure, the last UL transmission burst is for example completely a UL transmission burst.
   Furthermore, if the PUSCH is decoded correctly, all CWSs of different LBT priorities can be reset to their minimum values. Otherwise, the CWSs will be exponentially or linearly increased.
ii. For conditional LBT priorities, CWSs will be updated. In an embodiment, only the LBT priority utilized in the last transmission burst will update its CWS. Other LBT priorities maintain their CWS values.

Furthermore, a CWS can be reset if the number of times for using its maximal value reaches a predetermined number of times.

Preferably, for a certain UE, its CWS can be reset if the UE is not scheduled for a predetermined period of time.

Finally, similar to solution 1, when the UE is scheduled for UL transmission, the eNB will transmit the CWS value or a backoff counter generated therefrom to the UE via a Layer 1 signaling.

Embodiments of this disclosure will be set forth in details hereinafter. Specifically, the proposed UL channel access enhancement with eNB assistance includes the following features:

### - Determining the set of channel access parameters

The eNB determines the channel access parameters for the UE that will perform the LBT Category 4 operation before the UL transmission. We can assume a scenario as shown in Figure 2.

The UE1 and UE2 will perform LBT Category 4 operations before their UL transmissions. The eNB can help to determine the channel access parameters used in the LBT operations for the two UEs. The transmission duration for UE1 is 4 ms and the transmission duration for UE2 is 2 ms. According to the LBT priority definition in DL, UE1 should use a LBT priority larger than or equal to 3 and UE2 can use a LBT priority larger than or equal to 1 due to MCOT restriction. To obtain the channel access parameters at UE sides, the following options can be considered:
1. The eNB indicates the LBT priorities to UEs via Layer 1 signaling.
   If the eNB configures a common set of UL channel access parameters for all UEs, the eNB can indicate the LBT priority 3 to both UE1 and UE2.
   If the eNB configures different channel access parameters for each UE, the eNB could indicate the LBT priority 3 to UE1 and the LBT priority 1 to UE2.
2. The eNB indicates some of the access parameters (e.g., the CWS value, or maximum channel occupancy time, or the LBT gap configuration) to the UE via Layer 1 signaling.
   For example, the eNB can indicate the MCOT to UEs. Each UE can determine all UL channel access parameters according to its own traffic, the received information and predefined LBT priority.
3. If information on expected transmission duration can be acquired, the UE could determine the UL channel access parameters by itself without determining the UL channel access parameters and the LBT priorities by the eNB.

Herein, the eNB indicates the transmission duration to the UE explicitly or implicitly. By acquiring the transmission duration, the UE can select the UL channel access parameters according to the pre-defined rule described above. For example, UE2 could use LBT priority 1 for channel access according to the transmission duration although it has only Best Effort traffic.

### - CWS maintenance

Solution 1: A common CWS maintenance is configured for all UEs served by the eNB.

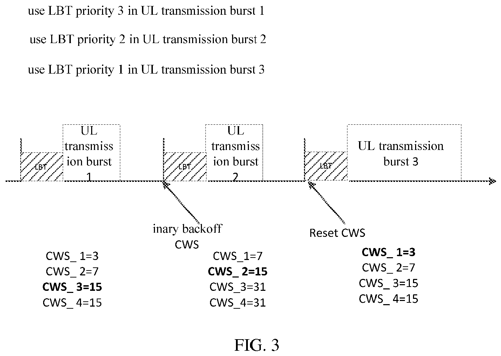

In this solution, the eNB may maintain only one set of CWSs with respect to different priorities for all UEs. Also assuming the scenario in Figure 2, UE1 and UE2 perform LBT Category 4 procedures for UL transmission bursts. If the eNB can decode the PUSCHs for the UE1 and UE2 in the first subframe of the UL transmission burst successfully, all the CWSs can be reset to minimum values corresponding to different priorities. If one of the PUSCHs cannot be decoded, all CWSs should be increased. In a word, CWSs in different priorities should be updated simultaneously as an example shown in Figure 3.

Solution 2: Individual CWS maintenances are configured for different UEs.

For each UE, the eNB maintains a set of CWSs with respect to different priorities. Also assuming the scenario in Figure 2, the eNB will update the CWSs of UE1 and the CWSs of UE2 after it decodes the first PUSCH of the UL transmission burst.
- For all LBT priorities, CWSs are updated.
   If the eNB can decode the PUSCH correctly, all LBT priorities reset their CWSs. Otherwise, all LBT priorities increase the CWS values exponentially or linearly.
- For conditional LBT priorities, CWSs will be updated.

In an embodiment, only the LBT priority used in the PUSCH will update its CWS.

It should be understood that the above embodiments which constitute a part of the principle of the disclosure are intended to describe but not to limit this disclosure.

Different technical features, apparatuses and methods presented in different embodiments can be combined to achieve beneficial effects. Furthermore, any reference number in claims should not be construed to limit the related claims. The word "comprise" or "include" does not exclude the presence of apparatuses or steps that are not listed in the claims and description.

## Claims

1. A method for assisting a User Equipment, UE, to implement an Uplink UL, channel access in a base station of an eLAA-based communication system, comprising: determining a listen-before-talk, LBT, priority for the UE; and transmitting a first signaling indicating the determined LBT priority to the UE , wherein determining a LBT priority for the UE further comprises: determining a set of UL channel access parameters according to predetermined factors; and determining the LBT priority based on the set of UL channel access parameters , wherein the predetermined factors at least comprise one or more of: number of UEs scheduled in the UL transmission burst; traffic types and interference situations of the scheduled UEs; and eLAA TDD configuration information.

2. The method of claim 1, wherein, a same set of UL channel access parameters is determined for all UEs; or different sets of UL channel access parameters are determined for different UEs.

3. A method for implementing an Uplink UL, channel access in a User Equipment, UE, of an eLAA-based communication system, comprising: receiving from a base station a first signaling, which indicates a listen-before-talk, LBT, priority determined by the base station for the UE or a portion of a set of UL channel access parameters determined by the base station for the UE wherein, in case that the first signaling indicates the LBT priority, the UE performs a LBT operation using a set of UL channel access parameters corresponding to the LBT priority; and in case that the first signaling indicates a portion of a set of UL channel access parameters, the UE determines other parameters in the set of UL channel access parameters and the LBT priority based on traffic type and the pre-stored relations between LBT priorities and UL channel access parameters, and performs a LBT operation using the set of UL channel access parameters, wherein the method further comprises: adjusting the LBT priority according to the traffic type.

4. The method of claim 3, wherein the method further comprises: transmitting a second type of traffics only after all of a first type of traffics have been transmitted, wherein a LBT priority of the first type of traffics is not less than the LBT priority, and a LBT priority of the second type of traffics is lower than the LBT priority.

## Patentansprüche

1. Verfahren zum Unterstützen eines Benutzergeräts, UE, beim Implementieren eines Uplink-, UL-, Kanalzugriffs in einer Basisstation eines eLAA-basierten Kommunikationssystems, umfassend: Bestimmen einer Listen-before-talk-, LBT-, Priorität für das UE; und Übertragen einer ersten Signalisierung, die die bestimmte LBT-Priorität angibt, an das UE,
wobei das Bestimmen einer LBT-Priorität für das UE ferner umfasst: Bestimmen eines Satzes von UL-Kanalzugriffsparametern gemäß vorbestimmter Faktoren; und Bestimmen der LBT-Priorität basierend auf dem Satz von UL-Kanalzugriffsparametern,
wobei die vorbestimmten Faktoren mindestens eines oder mehrere der folgenden Elemente umfassen: Anzahl von UEs, die in dem UL-Übertragungsburst geplant sind; Datenverkehrsarten und Interferenzsituationen der geplanten UEs; und eLAA-TDD-Konfigurationsinformationen.

2. Verfahren nach Anspruch 1, wobei ein gleicher Satz von UL-Kanalzugriffsparametern für alle UEs bestimmt wird; oder unterschiedliche Sätze von UL-Kanalzugriffsparametern für unterschiedliche UEs bestimmt werden.

3. Verfahren zum Implementieren eines Uplink-, UL-, Kanalzugriffs in einem Benutzergerät, UE, eines eLAA-basierten Kommunikationssystems, umfassend: Empfangen einer ersten Signalisierung von einer Basisstation, die eine von der Basisstation für das UE bestimmte Listen-before-talk-, LBT-, Priorität oder einen Teil eines Satzes von UL-Kanalzugriffsparametern angibt, die von der Basisstation für das UE bestimmt werden,
wobei, falls die erste Signalisierung die LBT -Priorität angibt, das UE eine LBT-Operation unter Verwendung eines Satzes von UL-Kanalzugriffsparametern durchführt, die der LBT-Priorität entsprechen; und wobei, falls die erste Signalisierung einen Teil eines Satzes von UL-Kanalzugriffsparametern angibt, das UE andere Parameter in dem Satz von UL-Kanalzugriffsparametern und die LBT-Priorität basierend auf der Art des Datenverkehrs und den vorgespeicherten Beziehungen zwischen LBT-Prioritäten und UL-Kanalzugriffsparametern bestimmt, und eine LBT-Operation unter Verwendung des Satzes von UL-Kanalzugriffsparametern durchführt, wobei das Verfahren ferner umfasst: Einstellen der LBT-Priorität entsprechend der Art des Datenverkehrs.

4. Verfahren nach Anspruch 3, wobei das Verfahren ferner umfasst: Übertragen einer zweiten Art von Datenverkehr erst nachdem alle einer ersten Art von Datenverkehr übertragen worden sind, wobei eine LBT-Priorität der ersten Art von Datenverkehr nicht geringer ist als die LBT-Priorität, und eine LBT-Priorität der zweiten Art von Datenverkehr niedriger ist als die LBT-Priorität.

## Revendications

1. Procédé pour aider un équipement utilisateur, UE, à mettre en œuvre un accès à un canal de liaison montante, UL, dans une station de base d'un système de communication basé sur un accès assisté par licence amélioré, eLAA, comprenant : la détermination d'une priorité écouter avant de parler, LBT, pour l'UE ; et l'émission d'une première signalisation indiquant la priorité LBT déterminée vers l'UE,
dans lequel la détermination d'une priorité LBT pour l'UE comprend en outre : la détermination d'un ensemble de paramètres d'accès à un canal d'UL selon des facteurs prédéterminés ; et la détermination de la priorité LBT sur la base de l'ensemble de paramètres d'accès à un canal d'UL,
dans lequel les facteurs prédéterminés comprennent au moins l'un ou plusieurs parmi : un nombre d'UE ordonnancés dans la rafale d'émission d'UL ; des types de trafic et des situations d'interférence des UE ordonnancés ; et des informations de configuration en duplex à répartition dans le temps, TDD, d'eLAA.

2. Procédé selon la revendication 1, dans lequel un même ensemble de paramètres d'accès à un canal d'UL est déterminé pour tous les UE ; ou différents ensembles de paramètres d'accès à un canal d'UL sont déterminés pour différents UE.

3. Procédé pour la mise en œuvre d'un accès à un canal de liaison montante, UL, dans un équipement utilisateur, UE, d'un système de communication basé sur un eLAA, comprenant : la réception, à partir d'une station de base, d'une première signalisation qui indique une priorité écouter avant de parler, LBT, déterminée par la station de base pour l'UE ou une partie d'un ensemble de paramètres d'accès à un canal d'UL déterminé par la station de base pour l'UE,
dans lequel, dans le cas où la première signalisation indique la priorité LBT, l'UE réalise une opération LBT à l'aide d'un ensemble de paramètres d'accès à un canal d'UL correspondant à la priorité LBT ; et dans le cas où la première signalisation indique une partie d'un ensemble de paramètres d'accès à un canal d'UL, l'UE détermine d'autres paramètres dans l'ensemble de paramètres d'accès à un canal d'UL et la priorité LBT sur la base du type de trafic et des relations pré-stockées entre priorités LBT et paramètres d'accès à un canal d'UL, et réalise une opération LBT à l'aide de l'ensemble de paramètres d'accès à un canal d'UL, dans lequel le procédé comprend en outre : l'ajustement de la priorité LBT selon le type de trafic.

4. Procédé selon la revendication 3, dans lequel le procédé comprend en outre : l'émission d'un second type de trafics uniquement après que tous les trafics d'un premier type de trafics ont été émis, dans lequel une priorité LBT du premier type de trafics n'est pas moindre que la priorité LBT, et une priorité LBT du second type de trafics est plus faible que la priorité LBT.
